# FASCICULE DE BREVET EUROPEEN

(11) **EP 3 385 573 B1**
(45) Date de publication et mention de la délivrance du brevet: **04.11.2020**
(21) Numéro de dépôt: 18162121.0
(22) Date de dépôt: 15.03.2018
(51) Int. Cl.: F16H 55/10, B64C 25/40, F16D 3/10, F16H 55/14, F16D 3/64, F16D 3/221

(54) **GALETS A ROULEAUX POUR L'ENTRAINEMENT EN ROTATION D'UNE ROUE D'AERONEF**
ROLLENWALZEN FÜR DEN DREHANTRIEB EINES LUFTFAHRZEUGRADS
ROLLER PINIONS FOR DRIVING AN AIRCRAFT WHEEL IN ROTATION

(30) Priorité: 29.03.2017 FR 1752633
(43) Date de publication de la demande: 10.10.2018
(73) Titulaire: Safran Landing Systems, 78140 Vélizy-Villacoublay (FR)
(72) Inventeur: VASLIN, Jean-Philippe, 78150 Le Chesney (FR); MALLET, Laurent, 83260 La Crau (FR); IVALDI, Frédéric, 83320 Carqueiranne (FR); GIRAUD, Frédérik, 75015 Paris (FR); DAFFOS, Mathieu, 92130 Issy-les-Moulineaux (FR)
(74) Mandataire: Lavialle, Bruno François Stéphane

(56) Documents cités:
- US-A- 5 113 713
- US-A1- 2016 195 167

## Description

L'invention concerne un galet à rouleau pour l'entraînement en rotation d'une roue d'aéronef.

### ARRIERE PLAN DE L'INVENTION

On connaît des aéronefs dont les atterrisseurs sont munis d'actionneurs d'entraînement en rotation des roues pour permettre le déplacement de l'aéronef sans utiliser les groupes propulseurs de l'aéronef. Parmi les différentes solutions envisagées, l'une d'elle consiste à prévoir un actionneur d'entraînement muni en sortie d'un pignon à rouleaux astreint à engrener avec une roue dentée solidaire de la jante de la roue. Cependant, les déformations subies par la roue et l'atterrisseur qui porte la roue lors du roulage imposent de prévoir des possibilités d'adaptations linéaire et angulaire de la position du pignon à rouleaux par rapport à la roue, et donc d'intégrer dans la chaîne de transmission des éléments déplaçables ou déformables. Ceci est d'autant plus vrai si l'actionneur d'entraînement est prévu mobile entre une position d'engagement dans laquelle le pignon à rouleaux engrène avec la roue dentée, et une position désengagée dans laquelle le pignon à rouleaux est éloigné de la roue dentée. En outre, il y a lieu de prévoir entre le pignon à rouleaux et le moteur d'entraînement un organe de filtrage propre à filtrer les à-coups de couple. Les éléments d'adaptation et les éléments de filtrage constituent des éléments additionnels, induisant un encombrement additionnel dans une zone déjà bien encombrée, et nécessitant une maintenance supplémentaire.

On connaît du document US 2016/0195167 un pignon à rouleau comprenant un élément denté intérieur s'engrenant autour d'un élément denté extérieur via deux roulements à rotule, lesdits roulements formant des moyens d'adaptation à un défaut d'alignement des éléments dentés.

On connaît également du document US 5 113 713 un dispositif de répartition de charge en élastomère agencé entre un engrenage droit et un arbre d'entraînement imbriqués l'un dans l'autre. Le dispositif comprend une bague cylindrique et une pluralité de patins rectangulaires, tous composés de plusieurs couches successives d'élastomère et de métal. La bague est disposée entre une surface cylindrique intérieure de l'engrenage et une surface cylindrique extérieure de l'arbre.

### OBJET DE L'INVENTION

L'invention vise à proposer une disposition particulièrement compacte de la transmission entre l'arbre de sortie de l'actionneur d'entraînement et le pignon à rouleaux, incluant un élément de filtrage et des éléments d'adaptation.

### PRESENTATION DE L'INVENTION

En vue de la réalisation de ce but, on propose un pignon à rouleaux destiné à tourner selon un axe central et comportant :
- une noix comportant en son centre un perçage axial pour le montage de la noix sur un arbre d'entraînement, la noix présentant une surface périphérique externe sphérique, et des évidements s'étendant sur toute la longueur de la noix définissant des faces parallèles à l'axe central entre lesquelles s'étendent une pluralité de secteurs régulièrement répartis;
- une cage qui porte les rouleaux et qui s'étend autour de la noix en présentant, en regard de la surface périphérique externe de la noix, une surface interne sphérique concentrique, et, en regard des évidements de la noix, des protubérances s'étendant à l'intérieur des évidements pour présenter en regard des faces des évidements des faces qui leur sont parallèles ;
- des lamelles métalliques disposées en paquets insérés chacun dans un espace s'étendant entre des faces en regard d'un évidement de la noix et d'une protubérance de la cage, les lamelles étant chacune recouvertes de matière élastomérique.

Une telle disposition offre diverses possibilités de déplacement de la cage par rapport à la noix, en translation selon l'axe de rotation ou selon des axes radiaux, ainsi qu'en rotation selon des axes radiaux. Elle assure également un filtrage des à-coups de transmission autour de l'axe de rotation grâce à la déformation de la matière élastomérique. Ces possibilités sont toutes regroupées dans le volume du pignon à rouleaux, ce qui permet un gain d'encombrement appréciable.

Les surfaces périphériques sphériques en regard permettent un débattement rotulaire de la cage par rapport à la noix. Selon divers modes particuliers de réalisation :
- l'espace entre les surfaces périphériques sphériques est rempli par de la matière élastomérique pour permettre, outre le débattement rotulaire, une possibilité de léger déplacement axial ou radial de la cage par rapport à la noix ;
- les surfaces périphériques sphériques en regard sont séparées par un faible jeu et l'espace entre ces surfaces est rempli de graisse ou de lubrifiant pour permettre un libre rotulage de la cage par rapport à la noix ;
- l'espace entre les surfaces périphériques sphériques reçoit des billes qui sont reçues dans des cavités de la noix et qui roulent dans des chemins de roulement de la cage dirigés selon un plan diamétral passant par l'axe central.

### DESCRIPTION DES FIGURES

L'invention sera mieux comprise à la lumière de la description qui suit d'un mode particulier de réalisation de l'invention en référence aux figures des dessins annexés parmi lesquelles :
- la figure 1 est une vue en perspective éclatée d'un pignon à rouleaux selon un premier mode particulier de réalisation de l'invention ;
- la figure 2 est une vue écorchée de la noix et de la cage du pignon de la figure 1 ;
- la figure 3 est une vue similaire à celle de la figure 2 d'un deuxième mode particulier de réalisation de l'invention avec un guidage rotulaire entre la cage et la noix ;
- la figure 4 est une vue similaire à celle de la figure 3 d'un troisième mode particulier de réalisation de l'invention avec des billes de guidage disposées entre la cage et la noix.

### DESCRIPTION DETAILLEE DE L'INVENTION

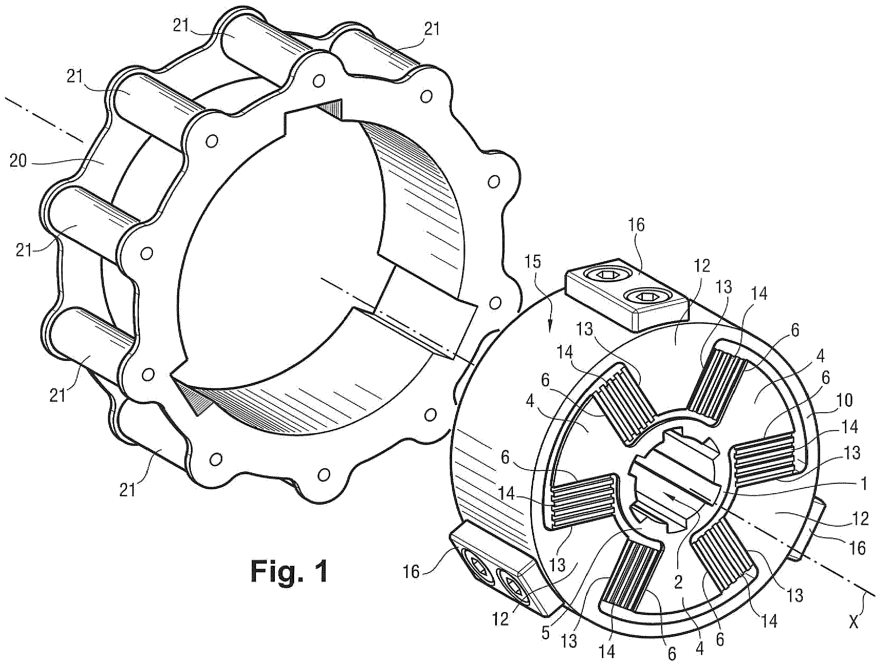

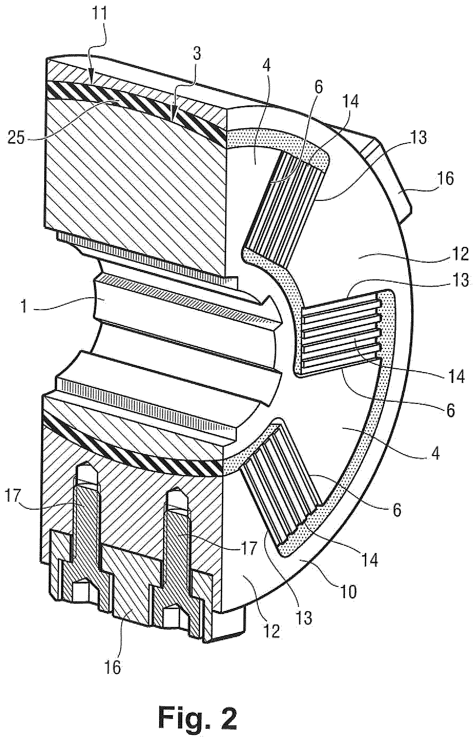

En référence aux figures 1 et 2, le pignon à rouleaux de l'invention comprend tout d'abord une noix 1 qui comporte un perçage 2 cylindrique selon un profil non circulaire (ici un profil cannelé) pour permettre le montage du pignon sur un arbre d'entraînement de sorte que l'axe central X de la noix coïncide avec l'axe de rotation de l'arbre. La noix 1 comporte une surface périphérique externe 3 sphérique. La noix 1 est ici fabriquée dans un bloc de métal dans lequel on a réalisé des évidements sur toute sa longueur pour laisser subsister des secteurs 4 régulièrement répartis qui s'étendent depuis un moyeu 5 jusqu'à la surface périphérique externe sphérique 3. Les secteurs 4, et donc les évidements, sont délimités par des faces planes 6 parallèles à l'axe central X. Le pignon à rouleaux de l'invention comporte par ailleurs une cage 10 qui entoure la noix 1 et qui présente, en regard de la surface périphérique externe sphérique 3 de la noix 1, une surface interne 11 sphérique concentrique. En regard des évidements, la cage 10 comporte des protubérances 12 qui s'étendent dans les évidements pour présenter en regards des faces des évidements des faces 13 qui leur sont parallèles. Chaque espace s'étendant entre une face d'un évidement et une face en regard d'une protubérance est occupé par un paquet de lamelles métalliques 14 (ici quatre lamelles par paquet) avec interposition de matière élastomérique entre les lamelles 14 ainsi qu'entre les lamelles 14 et les faces 6,13 en regard pour former des amortisseurs ayant une fonction de filtrage des à-coups de transmission de couple. Ici, tout l'espace libre la noix 1 et la cage 10 est comblé par de la matière élastomérique 25 qui autorise des légers déplacements de la cage 10 par rapport à la noix 1 selon l'axe central X ainsi que selon des axes radiaux. Elle autorise également un léger déversement angulaire autour des axes radiaux. Bien entendu, on pourra choisir les caractéristiques de la matière élastomérique 25 pour régler l'amplitude de ces déplacements et déversements. On remarquera que l'espace entre les surfaces périphériques sphériques est ici prévu suffisamment important pour permettre l'introduction de la noix 1 dans la cage 10 lors du montage de l'ensemble, avant remplissage par la matière élastomérique 25.

Ici, la cage 10 porte les rouleaux de la façon suivante. La cage 10 comporte une surface périphérique externe 15 généralement cylindrique circulaire, munie d'obstacles 16 qui sont vissés sur la cage 10 au moyen de vis 17 s'enfonçant dans les protubérances 12. Sur cette surface externe est rapporté un support annulaire 20 qui porte les rouleaux 21. Les obstacles assurent la transmission du couple entre la cage 10 et le support annulaire 20. Le support annulaire est arrêté axialement par tout moyen connu, et peut être changé pour remplacer les rouleaux, sans nécessiter le démontage de l'ensemble du pignon. Alternativement, on pourra choisir de faire porter directement les rouleaux par la cage, en se passant d'un support rapporté.

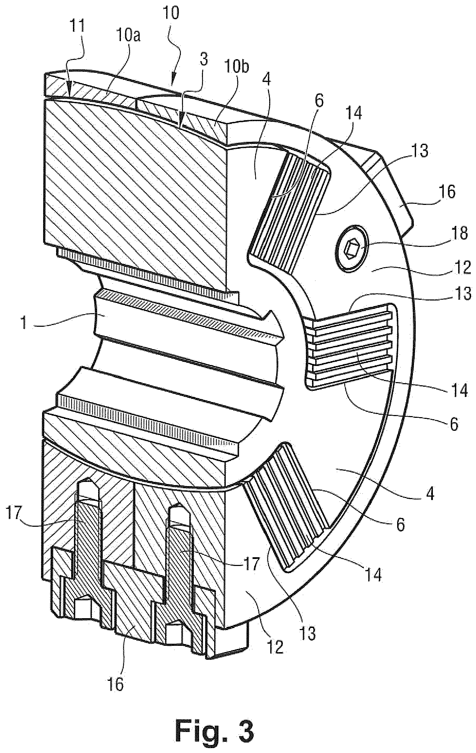

Selon un deuxième mode particulier de réalisation illustré à la figure 3, la liaison entre la noix 1 et la cage 10 se réduit à une liaison rotulaire réalisée directement entre les surfaces sphériques 3,11 en regard. Compte tenu du faible jeu qui doit être installé entre les deux surfaces pour réaliser une liaison rotulaire efficace, la cage 10 ne peut plus être réalisée en un bloc et est donc divisée en deux demi-cages 10a et 10b séparées selon un plan P perpendiculaire à l'axe central. Ces deux moitiés sont rapportées autour de la noix 1 et solidarisées entre elles par exemple par des vis d'assemblage 18 s'étendant parallèlement à l'axe central X, ou, si cela s'avère suffisant, uniquement par les vis 17 qui assemblent les obstacles 16 à la cage 10. Ici l'espace entre les surfaces sphériques 3,11 en regard a été exagéré pour plus de clarté. Le jeu est en réalité très faible. Cet espace est graissé ou lubrifié. Cette disposition permet un débattement rotulaire de la cage 10 par rapport à la noix 1, mais bien entendu limite les déplacements axiaux et radiaux de la cage 10 par rapport à la noix 1.

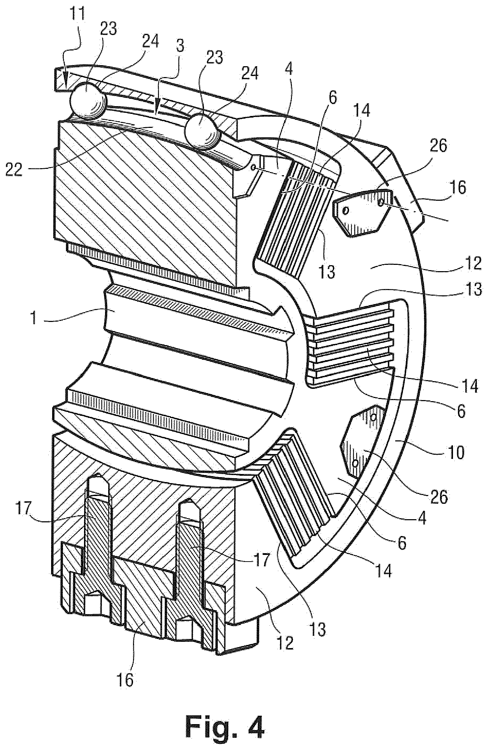

Selon un troisième mode particulier de réalisation illustré à la figure 4, la noix 1 comporte maintenant des chemins de roulement 22 creusés dans la surface périphérique externe et dans lesquels roulent des billes 23 qui sont logées dans des cavités 24 creusées dans la surface sphérique interne 11 de la cage 10, de sorte que les billes 23 sont fixes (à part leur roulement dans leurs cavités respectives) vis-à-vis de la cage 10. Les chemins de roulement 20 sont dirigés selon un plan passant par l'axe central X. Les chemins de roulement 20 sont plus larges que le diamètre des billes pour autoriser un débattement angulaire de la cage 10 par rapport à la noix autour d'axes radiaux. Les chemins de roulements 22 sont de préférence débouchants sur la face de la noix et fermés par des capots 26 après mise en place des billes 23. Alternativement, les chemins de roulements ne sont pas débouchants, et les billes sont montées à force. Le tout est abondamment graissé pour faciliter le roulement des billes. En variante, chaque chemin de roulement pourra ne recevoir qu'une seule bille.

## Revendications

1. Pignon à rouleaux (21) destiné à tourner selon un axe central (X) et comportant :
- une noix (1) comportant en son centre un perçage axial (2) pour le montage de la noix sur un arbre d'entraînement, la noix présentant une surface périphérique externe (3) sphérique, et des évidements s'étendant sur toute la longueur de la noix définissant des faces (6) parallèles à l'axe central (X) entre lesquelles s'étendent une pluralité de secteurs (4) régulièrement répartis;
- une cage (10) qui porte les rouleaux et qui s'étend autour de la noix en présentant, en regard de la surface périphérique externe de la noix, une surface interne (11) sphérique concentrique, et, en regard des évidements de la noix, des protubérances (12) s'étendant à l'intérieur des évidements pour présenter en regard des faces des évidements des faces (13) qui leur sont parallèles ;
- des lamelles métalliques (14) disposées en paquets avec interposition de matière élastomérique entre les lamelles, insérés chacun dans un espace s'étendant entre des faces en regard d'un évidement de la noix et d'une protubérance de la cage.

2. Pignon à rouleaux selon la revendication 1, dans lequel les rouleaux sont portés par un support annulaire (20) qui est rapporté sur une surface périphérique externe de la cage (10).

3. Pignon à rouleaux selon la revendication 1, dans lequel la surface périphérique externe (3) sphérique de la noix (1) et la surface interne (11) sphérique concentrique de la cage (10) délimitent un espace libre rempli de matière élastomérique (25).

4. Pignon à rouleaux selon la revendication 1, dans lequel la surface périphérique externe (3) sphérique de la noix (1) et la surface interne (11) sphérique concentrique de la cage (10) s'étendent en regard l'une de l'autre avec un jeu de fonctionnement apte à réaliser une liaison rotulaire entre la noix (1) et la cage (10).

5. Pignon à rouleaux selon la revendication 4, dans lequel la cage (10) est séparée en deux demi-cages (10a,10b) assemblées selon un plan perpendiculaire à l'axe central (X).

6. Pignon à rouleaux selon la revendication 1, dans lequel des billes (23) sont interposées entre la noix (1) et la cage (10).

7. Pignon à rouleaux selon la revendication 6, dans lequel les billes s'étendent d'une part dans des cavités (24) réalisées dans la cage (10), et d'autre part dans des chemins de roulement (22) creusés dans la noix (1).

## Patentansprüche

1. Rollenritzel (21), das dazu bestimmt ist, sich um eine Mittelachse (X) zu drehen, und umfasst:
- einen Kern (1), der in seiner Mitte eine axiale Bohrung (2) für die Montage des Kerns auf einer Antriebswelle umfasst, wobei der Kern eine kugelförmige Außenumfangsfläche (3) aufweist, und Aussparungen, die sich über die gesamte Länge des Kerns erstrecken und zur Mittelachse (X) parallele Flächen (6) definieren, zwischen denen sich eine Vielzahl von gleichmäßig verteilten Sektoren (4) erstreckt;
- einen Käfig (10), der die Rollen trägt und der sich um den Kern herum erstreckt und dabei gegenüber der Außenumfangsfläche des Kerns eine konzentrische kugelförmige Innenfläche (11) und gegenüber den Aussparungen des Kerns Vorsprünge (12) aufweist, die sich ins Innere der Aussparungen erstrecken, um gegenüber den Flächen der Aussparungen Flächen (13) aufzuweisen, die parallel zu ihnen sind;
- metallene Lamellen (14), die unter Zwischenanordnung eines elastomeren Materials zwischen den Lamellen in Bündeln angeordnet sind, die jeweils in einen Raum eingefügt sind, der sich zwischen den gegenüberliegenden Flächen einer Aussparung des Kerns und eines Vorsprungs des Käfigs erstreckt.

2. Rollenritzel nach Anspruch 1, bei dem die Rollen von einem ringförmigen Träger (20) getragen werden, der auf einer Außenumfangsfläche des Käfigs (10) befestigt ist.

3. Rollenritzel nach Anspruch 1, bei dem die kugelförmige Außenumfangsfläche (3) des Kerns (1) und die konzentrische kugelförmige Innenfläche (11) des Käfigs (10) einen freien Raum begrenzen, der mit elastomerem Material (25) gefüllt ist.

4. Rollenritzel nach Anspruch 1, bei dem sich die kugelförmige Außenumfangsfläche (3) des Kerns (1) und die konzentrische kugelförmige Innenfläche (11) des Käfigs (10) einander gegenüberliegend mit einem Betriebsspiel erstrecken, das dazu geeignet ist, eine Kugelgelenkverbindung zwischen dem Kern (1) und dem Käfig (10) herzustellen.

5. Rollenritzel nach Anspruch 4, bei dem der Käfig (10) in zwei Halbkäfige (10a, 10b) geteilt ist, die in einer zur Mittelachse (X) senkrechten Ebene zusammengefügt sind.

6. Rollenritzel nach Anspruch 1, bei dem Kugeln (23) zwischen dem Kern (1) und dem Käfig (10) angeordnet sind.

7. Rollenritzel nach Anspruch 6, bei dem sich die Kugeln einerseits in Hohlräumen (24) erstrecken, die in dem Käfig (10) ausgebildet sind, und andererseits in Rollbahnen (22), die in dem Kern (1) ausgehöhlt sind.

## Claims

1. A roller pinion (21) for rotating about a central axis (X) and comprising:
- a core (1) having an axial bore (2) at its center for mounting the core on a drive shaft, the core presenting an outer peripheral surface (3) that is spherical, and recesses extending over the entire length of the core defining faces (6) parallel to the central axis (X) with a plurality of regularly distributed sectors (4) extending between them;
- a cage (10) that carries the rollers and that extends around the core, and that presents, facing the outer peripheral surface of the core, a concentric spherical inner surface (11), and facing the recesses of the core, protuberances (12) extending inside the recesses so as to present faces (13) facing the faces of the recesses and parallel thereto; and
- metal strips (14) arranged in bundles with elastomer material interposed between the strips, each bundle being inserted in a space extending between facing faces of a recess in the core and a protuberance of the cage.

2. A roller pinion according to claim 1, wherein the rollers are carried by an annular support (20) that is fitted onto an outer peripheral surface of the cage (10).

3. A roller pinion according to claim 1, wherein the peripheral outer surface (3) of the core (1) and the concentric spherical inner surface (11) of the cage (10) define an free space filled with elastomer material (25).

4. A roller pinion according to claim 1, wherein the peripheral outer surface (3) of the core (1) and the concentric spherical inner surface (11) of the cage (10) extend facing each other with operating clearance suitable for providing a ball-joint connection between the core (1) and the cage (10).

5. A roller pinion according to claim 4, wherein the cage (10) is split into two half-cages (10a, 10b) that are assembled together on a plane perpendicular to the central axis (X).

6. A roller pinion according to claim 1, wherein balls (23) are interposed between the core (1) and the cage (10).

7. A roller pinion according to claim 6, wherein the balls extend firstly in cavities (24) made in the cage (10), and secondly in ball races (22) formed in the core (1).
